Europäisches Patentamt

European Patent Office

Office européen des brevets

(19)

(11) **EP 0 989 049 B1**

(12) **EUROPÄISCHE PATENTSCHRIFT**

(45) Veröffentlichungstag und Bekanntmachung des Hinweises auf die Patenterteilung:
**20.09.2006  Patentblatt 2006/38**

(51) Int Cl.:
***B62D 6/00*** *(2006.01)*    ***B62D 12/00*** *(2006.01)*

(21) Anmeldenummer: **99116812.1**

(22) Anmeldetag: **01.09.1999**

(54) **Anhängergespann und Verfahren zur Stabilisierung eines Anhängergespanns**

Tractor-trailer combination and method for its stabilisation

Attelage comportant une remorque et procédé pour sa stabilisation

(84) Benannte Vertragsstaaten:
**AT BE CH CY DE DK ES FI FR GB GR IE IT LI LU MC NL PT SE**

(30) Priorität: **24.09.1998   DE 19843826**

(43) Veröffentlichungstag der Anmeldung:
**29.03.2000   Patentblatt 2000/13**

(73) Patentinhaber: **Volkswagen Aktiengesellschaft
38436 Wolfsburg (DE)**

(72) Erfinder: **Witte, Bastian Dr.
38179  Gross Schwülper (DE)**

(56) Entgegenhaltungen:
EP-A- 0 469 355      DE-A- 4 410 465
DE-C- 4 127 750      US-A- 5 423 391

• **PATENT ABSTRACTS OF JAPAN vol. 1997, no. 07, 31. Juli 1997 (1997-07-31) & JP 09 089076 A (MITSUBISHI MOTORS CORP), 31. März 1997 (1997-03-31)**

**Beschreibung**

Die Erfindung betrifft ein Verfahren zur Stabilisierung eines Anhängergespanns, das von einer Zugmaschine und mindestens einem mit der Zugmaschine über eine Kupplung verbundenen Anhänger gebildet ist, und ein entsprechendes Anhängergespann.

Ein derartiges Verfahren ist aus der Dissertation "Verbesserung der Fahrstabilität von Pkw-Gespannen mit aktiv gesteuerten Lenkungen" von Herrn Dipl.-Ing. Jens Desens an der Technischen Universität Berlin, Esslingen 1991, bekannt.

Bei zunehmender Geschwindigkeit des Anhängergespanns nimmt die Eigendämpfung des Fahrzeugsystems üblicherweise stark ab, so daß ein Schlingern des Anhängers einsetzt. Aus Fahrversuchen ist bekannt, daß insbesondere bei Geschwindigkeiten jenseits von 80 km/h das Anhängergespann instabil werden kann und die Amplituden der Schlingerbewegung anwachsen. Dieser Effekt verstärkt sich bei ungünstigen Massenträgheitsverhältnissen, das heißt bei zunehmenden Gewichten des Anhängers und verhältnismäßig leichten Zugmaschinen. Die Fahrer der Zugmaschine sind jedoch oft ungeübte Gespannfahrer, so daß bei einsetzendem Schlingern eine wirksame Korrekturmaßnahme des Fahrers in der Regel an mangelnder Erfahrung scheitert und sich das Gespann gefährlich aufschaukelt bzw. gar verunfallt.

Das bekannte Verfahren zum Abbau der auftretenden Schlingerbewegungen automatisiert daher die erforderlichen Lenkbewegungen, hier insbesondere für die Hinterachse beschrieben, indem der Knickwinkel zwischen dem Zugfahrzeug und Anhänger mittels eines als Potentiometer ausgebildeten Knickwinkelsensor, der an dem Anhänger befestigt ist und mit dem Zugfahrzeug derart zusammenwirkt, daß ein Schlingern des Anhängers das Potentiometer verstellt und so das gewünschte Meßsignal erzeugt, erfaßt und als Regelgröße verwendet wird. Dies hat den Vorteil, daß neben dem Abbau eines kritischen Schlingerzustands, beispielsweise durch eine ruckhafte Lenkung im Falle einer Ausweichsituation hervorgerufen, das Fahrzeug auch bei höheren Geschwindigkeiten ausreichend stabil bleibt, so daß die Reisegeschwindigkeit eines Gespanns erhöht werden kann.

Nachteilig bei dem bekannten System ist jedoch, dass der Anhänger mit einer entsprechenden Hardware versehen sein muss, die eine Detektion und Regelung eines kritischen Schlingerzustands ermöglicht. Gerade im Falle von Pkw-Anhängern, wie beispielsweise Wohnanhängern, sind die Standzeiten der Anhänger jedoch relativ hoch, so dass mit einer Durchsetzung des Systems erst nach verhältnismäßig langer Zeit zu rechnen ist.

Ein weiterer Nachteil der bekannten Stabilisierungsverfahren liegt darin, dass sie erst nach Überschreiten einer bestimmten Toleranz für die Regelabweichung einsetzen. Dies bedeutet in der Praxis, dass bereits ein verhältnismäßig kritischer Schlingerzustand des Anhängers vorliegen muss, bevor die Regelung eingreift, was entsprechend ausgeprägte Reglereingriffe erforderlich macht. Hierdurch wird zum einen der Fahrkomfort reduziert und zum anderen die benötigte Zeit, bis die Amplituden der Anhängerschlingerbewegung unter ein kritisches Maß gefallen sind, entsprechend lang ist.

Aus der DE 44 31 698 C1 ist ferner ein Verfahren zur Begrenzung des Knickwinkels eines Gespanns, hier ein Gelenkbus, bekannt, bei dem durch selektives Betätigen der Fahrzeugbremsen an den einzelnen Rädern jeweils nach hinten gerichtete Kräfte erzeugt werden, deren Momente der Schlingerbewegung entgegenwirken. Obwohl mit diesem Verfahren ein Schlingern wirksam abbaubar ist, stellt die Betätigung der Fahrzeugbremsen einen verhältnismäßig großen Regeleingriff dar, der erst jenseits eines Toleranzbandes, das heißt nach Überschreitung einer kritischen Schlingeramplitude, vorgenommen werden kann. Dies hat zur Folge, dass der Regelungseingriff als niederfrequenter Bremseingriff durch die Fahrdynamikregelung für den Passagier des Fahrzeugs nicht unbemerkt bleibt, was wiederum negativen Einfluss auf den Fahrkomfort hat.

Die US-A-5423391 betrifft ein Verfahren und eine Vorrichtung zur Verbesserung der Manövrierbarkeit eines Fahrzeugs durch Variation des Übersetzungsverhältnisses zwischen einem am Lenkrad vorgegebenen Lenkwinkel eines Fahrzeugs und dem an dessen lenkbarer Achse angreifenden Winkel in Abhängigkeit der Gierrate des Fahrzeugs. Hierfür werden der Lenkwinkel ($\theta_1$ bzw. $\delta_l$), eine Ist-Gierrate ($\phi$ bzw. $\psi^{\circ}_{ist}$) und die Fahrzeuggeschwindigkeit ($v$) erfasst. Anhand von Tabellen oder Funktionen wird eine Soll-Gierrate ($\phi T$ bzw. $\psi^{\circ}_{soll}$) aus dem Lenkwinkel ($61$ bzw. $\delta_l$) und der Fahrzeuggeschwindigkeit ($v$) ermittelt. Dadurch werden insbesondere Verbesserungen bei niederfrequenten Anregungen erreicht, beispielsweise in langgezogenen Kurven mit nahezu konstantem Lenkwinkel.

Aufgabe der Erfindung ist es, ein Verfahren zur Stabilisierung eines Anhängergespanns bei dem ein Schlingern oder gar Aufschaukeln des Anhängers bei möglichst geringem Aufwand für fahrzeugseitige Vorkehrungen wirksam unterdrück bzw. abgebaut werden, sowie ein entsprechendes Anhängergespann zu schaffen.

Die Aufgabe wird mit einem Verfahren gemäß den Merkmalen des Patentanspruchs 1 und einem Anhängergespann gemäß den Merkmalen des Patentanspruchs 6 gelöst.

Vorteilhafte Aus- und Weiterbildungen sind in den Unteransprüchen dargestellt.

Gemäß dem erfindungsgemäßen Verfahren ist vorgesehen, dass die Ist-Gierbewegung der Zugmaschine bestimmt und mit einer Soll-Gierbewegung der Zugmaschine verglichen wird. Tritt eine Differenz zwischen der Soll-Gierbewegung und der Ist-Gierbewegung auf, wird der Lenkwinkel der Räder einer lenkbaren Fahrzeugachse der Zugmaschine zum Abbau der Differenz verändert

Weiterhin hat sich als vorteilhaft herausgestellt, dass als Wert für die Gierbewegung die Gierwinkelgeschwindigkeit verwendet wird. Dabei wird die Soll-Gierwinkelgeschwindigkeit aus der stationären Soll-Giergeschwindigkeit der Zugmaschine, das heißt bei stationärer Kreisfahrt, aus der Fahrgeschwindigkeit $v$ dem Fahrerwunsch-Lenkwinkel $\delta_l$ und der charakteristischen Fahrgeschwindigkeit $v_{ch}$ ermittelt und ergibt sich aus der Formel:

$$\dot{\psi}_{stat} = \frac{1}{i_l \cdot l} \cdot \frac{v}{1 + \left(\dfrac{v}{v_{ch}}\right)^2} \cdot \delta_l$$

Neben den bereits genannten Größen ist $i_l$ die sogenannte Lenkübersetzung.

Die Berechnung der stationären Kreisfahrt ist bereits aus verschiedenen Veröffentlichungen bekannt.

Ein reales Fahrzeug erreicht diesen stationären Entwurf nicht sofort, aus diesem Grund ist vorgesehen, dass der aus der stationären Soll-Giergeschwindigkeit der Zugmaschine ermittelten Soll-Gierwinkelgeschwindigkeit ein dynamisches Übergangsverhalten aufmoduliert wird.

Der Vorteil des erfindungsgemäßen Verfahrens liegt dabei insbesondere darin, dass kein zusätzlicher baulicher Aufwand am Anhänger entsteht. Daraus wiederum resultiert, dass das Verfahren auch für herkömmliche Anhänger genutzt werden kann, ohne daran Umbauten vorzunehmen. Als weiterer Vorteil ist weiterhin zu nennen, dass aufgrund des erfindungsgemäßen Verfahrens kein Umschalten zwischen Solofahrzeug und Anhängerbetrieb notwendig wird.

Außerdem liegt ein Vorteil der Erfindung insbesondere darin, dass das System bereits sehr schnell auf kleine Störungen reagiert, nicht erst, wenn der Anhänger bereits zu Schlingern begonnen hat.

Nach einer bevorzugten Weiterbildung des erfindungsgemäßen Verfahrens ist vorgesehen, dass der Lenkwinkel aller Räder der lenkbaren Fahrzeugachse um einen gleichen Betrag verändert wird.

Vorteilhafterweise sollte das Soll-Übertragungsverhalten ein Verhalten vom Typ PT1 sein, welches schnell reagiert und kein Überschwingen aufweist. Ein noch besseres Verhalten erzielt man mit einem schnell ansprechenden, nur ganz leicht überschwingenden Verhalten vom Typ PDT2 mit einer Dämpfung unter 1,0.

Nach einer weiteren Ausbildung des erfindungsgemäßen Verfahrens kann vorgesehen sein, dass um die Soll-Gierwinkelgeschwindigkeit ein Toleranzband gelegt wird.

Nachfolgend wird die Erfindung anhand eines Ausführungsbeispiels näher beschrieben. Die zugehörigen Zeichnungen zeigen

Fig. 1    eine schematische Darstellung eines Anhängergespanns,

Fig. 2    ein Blockschaltbild einer erfindungsgemäßen Stabilisierungseinrichtung,

Fig. 3    ein Blockschaltbild der Einrichtung zur Berechnung der Soll-Gierwinkelgeschwindigkeit,

Fig. 4    Verläufe der Soll-Gierwinkelgeschwindigkeit über der Zeit,

Fig. 5a    Verläufe eines eingestellten Lenkwinkels an den Rädern einer lenkbaren Vorderachse der Zugmaschine und

Fig. 5b    einen entsprechenden Verlauf des Knickwinkels zwischen Zugfahrzeug und Anhänger

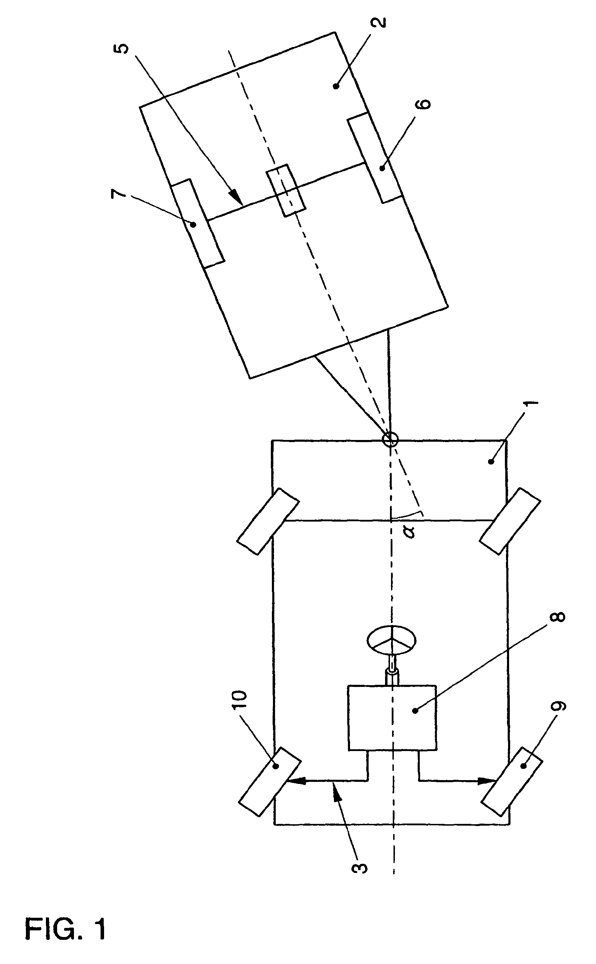

Das in Fig. 1 gezeigte Anhängergespann besteht aus dem Zugfahrzeug 1 mit einer lenkbaren Vorderachse 3, an das heckseitig über eine Anhängerkupplung 4 ein Anhänger 2 gelenkig angekoppelt ist. Der Anhänger weist eine Radachse 5 mit zwei Rädern, dem rechten Anhängerrad 6 und dem linken Anhängerrad 7 auf.

Nach einem Lenkeinschlag des Zugfahrzeuges 1, das heißt bei Kurvenfahrt oder Ausweichen eines Hindernisses, weist der Anhänger 2 gegenüber dem Zugfahrzeug 1 einen Knickwinkel $\alpha$ um die den Drehpunkt bildende Anhängerkupplung 4 auf.

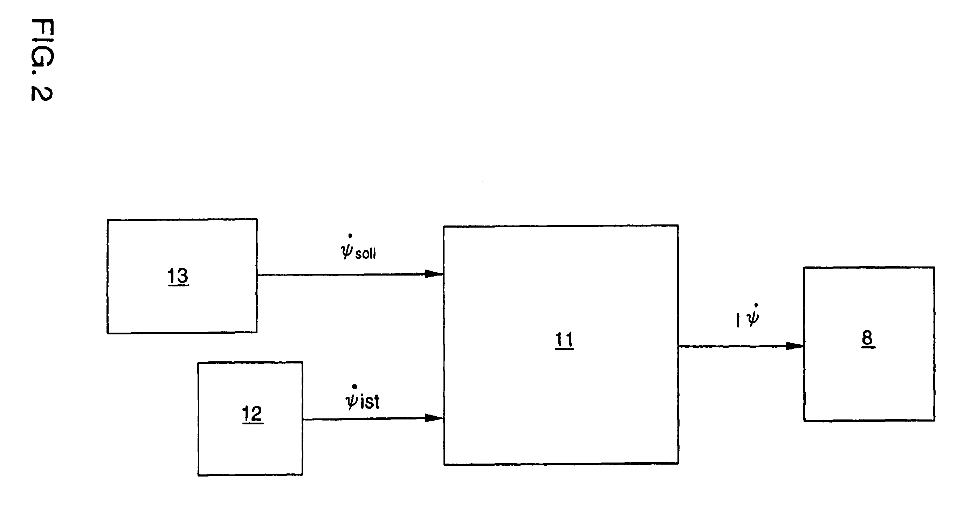

Das Zugfahrzeug 1 besitzt eine Lenkeinrichtung 8, beispielsweise ein sogenanntes steer-by-wire-System, mit deren Hilfe es möglich ist, einen Lenkwinkel an den Rädern 9 und 10 der gelenkten Vorderachse 3 vorzugeben, der von dem Fahrerwunsch-Lenkwinkel abweicht. Außerdem weist das Zugfahrzeug 1 eine Stabilisierungseinrichtung 11 auf, der die Ist-Gierwinkelgeschwindigkeit $\dot{\psi}_{ist}$ von einem Gierratensensor 12 zugeführt wird (Figur 2).

Der Stabilisierungseinrichtung 11 ist weiterhin eine Einrichtung 13 zur Berechnung einer Soll-Gierwinkelgeschwindigkeit $\dot{\psi}_{soll}$ zugeordnet. Die Stabilisierungseinrichtung 11 bildet die Differenz aus der Ist-Gierwinkelgeschwindigkeit $\dot{\psi}_{ist}$ und der Soll-Gierwinkelgeschwindigkeit $\dot{\psi}_{soll}$. Liegt eine Differenz vor, wird eine Stellgröße $l_{\dot{\psi}}$ bestimmt und der Lenkeinrichtung 8 zugeleitet. In Abhängigkeit der Stellgröße $l_{\dot{\psi}}$ gibt die Lenkeinrichtung 8 einen Zusatzlenkwinkel den Rädern 9, 10 der lenkbaren Vorderachse 3 des Zugfahrzeuges 1 vor, der dem Fahrerwunsch-Lenkwinkel $\delta_l$ hinzuaddiert wird.

Aufgrund dieses Zusatzlenkwinkels erfolgt zusätzlich eine stabilisierende Wirkung am Anhänger 2, so daß die Amplitude des Knickwinkels $\alpha$ zwischen Zugfahrzeug 1 und Anhänger 2 abgebaut wird.

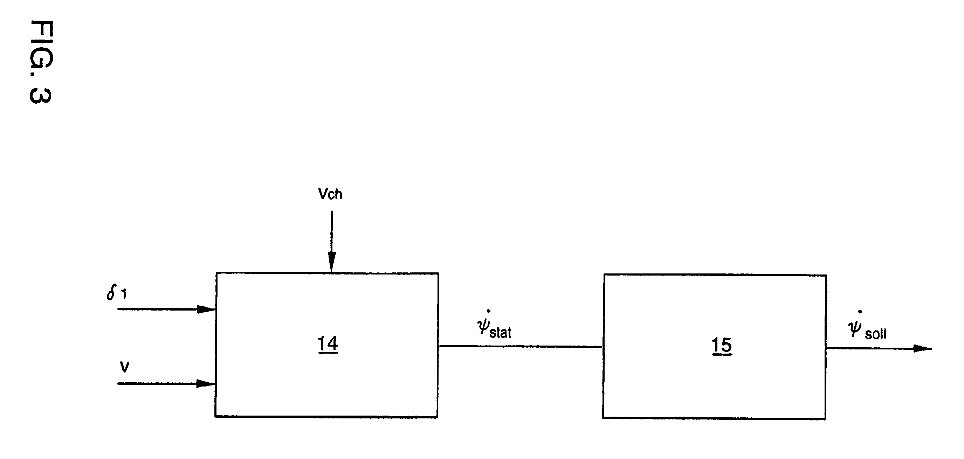

Figur 3 zeigt nun das Blockschaltbild der Einrichtung zur Berechnung der Soll-Gierwinkelgeschwindigkeit $\dot{\psi}_{soll}$.

In einem ersten Schritt wird die Soll-Gierwinkelgeschwindigkeit aus dem stationären Gierverhalten der Zugmaschine ermittelt. Dazu wird dem Berechnungsabschnitt 14 der Fahrerwunsch-Lenkwinkel $\delta_l$, die momentane Fahrgeschwindigkeit $\nu$ und die charakteristische Fahrgeschwindigkeit $\nu_{ch}$ zugeführt. Die charakteristische Fahrgeschwindigkeit ist eine fiktive Größe, in die Fahrzeugdaten, wie die Masse der Zugmaschine, der Radstand, die Schwerpunktlage, Reifeneigenschaften der Räder beider Achsen sowie das Massenträgheitsmoment eingehen. Ihre Ermittlung ist aus dem Stand der Technik bekannt.

Aus den genannten Daten wird eine stationäre Soll-Giergeschwindigkeit $\dot\psi_{stat}$ nach der Formel

$$\dot\psi_{stat} = \frac{1}{i_l \cdot l} \cdot \frac{v}{1+\left(\dfrac{v}{v_{ch}}\right)^2} \cdot \delta_l$$

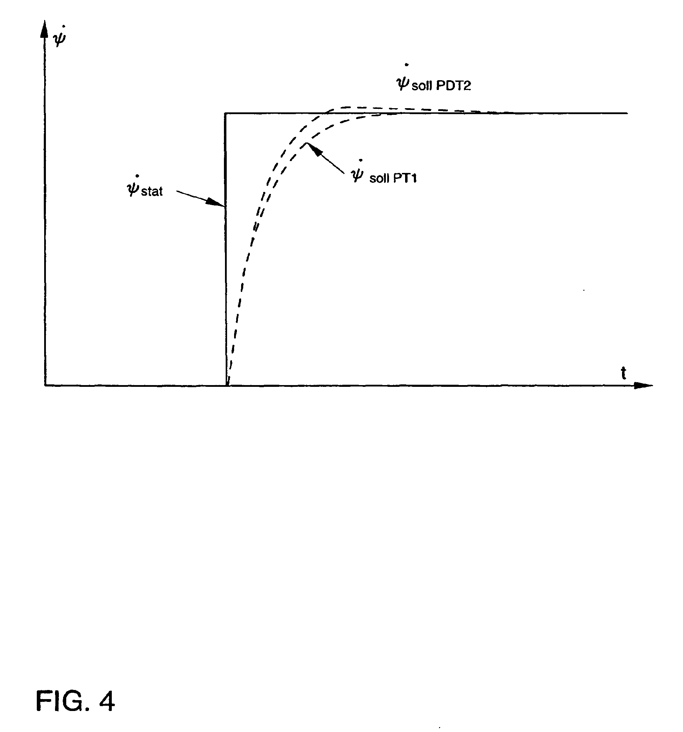

ermittelt, wobei $i_l$ die Lenkübersetzung ist. Ein charakteristischer Verlauf der stationären Soll-Gierwinkelgeschwindigkeit ist in Figur 4 dargestellt.

Ein reales Fahrzeug erreicht diesen Endwert nicht sofort, sondern nach einem Übergangsverhalten. Folglich wird im Schritt 15 ein reales Fahrzeug approximiert, das heißt ein derartiges Übergangsverhalten auf die stationäre Soll-Gierwinkelgeschwindigkeit aufmoduliert. Dafür gibt es verschiedene Möglichkeiten, beispielsweise ein Übergangsverhalten vom Typ PT 1, so daß die Soll-Gierwinkelgeschwindigkeit Gierwinkelgeschwindigkeit $\dot\psi_{soll}$ schnell reagiert und kein Überschwingen aufweist. Ein noch besseres Verhalten erzielt man mit einem schnell ansprechenden, nur ganz leicht überschwingenden Verhalten vom Typ PDT2 mit einer Dämpfung von 0,95. Der Verlauf beider Soll-Gierwinkelgeschwindigkeiten $\dot\psi_{sollPT1}$, $\dot\psi_{sollPDT2}$ ist ebenfalls in Figur 4 dargestellt

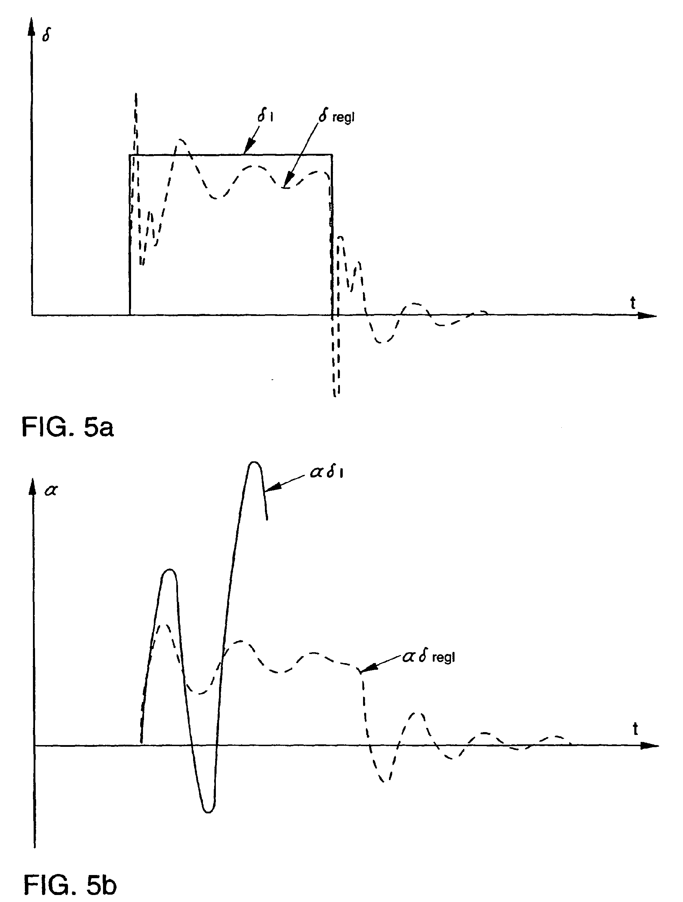

In den Figuren 5a und Figur 5b ist jeweils der Knickwinkel $\alpha$ aufgrund des Fahrerwunsch-Lenkwinkel $\delta_l$ (ungeregelter Fall) und aufgrund eines geregelten Lenkwinkels $\delta_{regl}$ (geregelter Fall) dargestellt, dabei ist unter dem geregelten Lenkwinkel $\delta_{regl}$ der Lenkwinkel zu verstehen, den die Stabilisierungseinrichtung an den gelenkten Rädern 9, 10 einstellt. Die stabilisierende Wirkung des geregelten Lenkwinkels $\delta_{regl}$ ist deutlich am zeitlichen Verlauf des Knickwinkels $\alpha$ abzulesen. Die Erfindung ermöglicht somit ein Anhängergespann auch bei höheren Geschwindigkeiten stabil zu halten.

**BEZUGSZEICHEN**

1    Zugfahrzeug
2    Anhänger
3    lenkbare Vorderachse
4    Anhängerkupplung

5    Radachse
6, 7    Anhängerräder
8    Lenkeinrichtung
9, 10    Räder an der lenkbaren Vorderachse der Zugmaschine
11    Stabilisierungseinrichtung
12    Gierratensensor
13    Einrichtung zur Ermittlung der Soll-Gierwinkelgeschwindigkeit
14    Berechnungsschritt
15    Berechnungsschritt

$\alpha$    Knickwinkel
$I_{\dot\psi}$    Stellgröße
$\dot\psi_{soll}$    Soll-Gierwinkelgeschwindigkeit
$\delta_l$    Fahrerwunsch-Lenkwinkel
$V$    Fahrgeschwindigkeit
$V_{ch}$    charakteristische Fahrgeschwindigkeit
$\dot\psi_{stat}$    stationäre Soll-Giergeschwindigkeit
$\delta_{regl}$    geregelter Lenkwinkel
$\dot\psi_{ist}$    Ist-Gierwinkelgeschwindigkeit

**Patentansprüche**

1. Verfahren zur Stabilisierung eines Anhängergespanns, das von einer Zugmaschine und mindestens einem mit der Zugmaschine über eine Kupplung verbundenen Anhänger gebildet ist, wobei die Ist-Gierwinkelgeschwindigkeit ($\dot\psi_{ist}$) der Zugmaschine (1) bestimmt und mit einer Soll-Gierwinkelgeschwindigkeit ($\dot\psi_{soll}$) der Zugmaschine (1) verglichen wird und bei Auftreten einer Differenz zwischen der Soll-Gierwinkelgeschwindigkeit und der Ist-Gierwinkelgeschwindigkeit der Lenkwinkel ($\delta_l$) der Räder (9, 10) einer lenkbaren Fahrzeugachse (3) der Zugmaschine (1) zum Abbau der Differenz verändert wird, so dass die Amplitude des Knickwinkels $\alpha$ abgebaut wird, wobei die Soll-Gierwinkelgeschwindigkeit ($\psi\dot\psi_{soll}$) zumindest aus der stationären Soll-Giergeschwindigkeit ($\dot\psi_{stat}$) der Zugmaschine (1) ermittelt wird und der aus der stationären Soll-Giergeschwindigkeit ($\dot\psi_{stat}$) der Zugmaschine (1) ermittelten Soll-Gierwinkelgeschwindigkeit ($\dot\psi_{soll}$) ein dynamisches Übertragungsverhalten aufmoduliert wird, wobei die stationäre Soll- Giergeschwindigkeit

$$(\dot\psi_{stat}) = \frac{1}{i_l \cdot l} \cdot \frac{v}{1+\left(\dfrac{v}{v_{ch}}\right)^2} \cdot \delta_l$$ bei stationärer

Kreisfahrt aus der Fahrzeuggeschwindigkeit ($\nu$), dem Fahrwunsch-Lenkwinkel ($\delta_l$), der charakteristischen Fahrgeschwindigkeit ($\nu_{ch}$) und der Lenkübersetzung ($i_l$) ermittelt wird.

**2.** Verfahren nach Anspruch 1, **dadurch gekennzeichnet, dass** der Lenkwinkel ($\delta_l$) aller Räder der lenkbaren Fahrzeugachse (3) um einen gleichen Betrag verändert wird.

**3.** Verfahren nach einem der Ansprüche 1 oder 2, **dadurch gekennzeichnet, dass** das Übertragungsverhalten der Soll-Gierwinkelgeschwindigkeit ($\dot{\psi}_{soll}$) einem PT1-Glied entspricht.

**4.** Verfahren nach einem der Ansprüche 1 oder 2, **dadurch gekennzeichnet, dass** das Übertragungsverhalten der Soll-Gierwinkelgeschwindigkeit ($\dot{\psi}_{soll}$) einem PDT2-Glied, insbesondere mit einem Dämpfungsfaktor von weniger als 1, entspricht.

**5.** Verfahren nach einem der Ansprüche 1 bis 4, **dadurch gekennzeichnet, dass** um den Wert der Soll-Gierwinkelgeschwindigkeit ($\dot{\psi}_{soll}$) ein Toleranzband gelegt wird.

**6.** Anhängergespann mit einer Zugmaschine und zumindest einem mit der Zugmaschine über eine Kupplung verbundenen Anhänger, wobei eine Stabilisierungseinrichtung (11) zur Unterdrückung der Entstehung und/oder zum Abbau von unerwünschten Schlingerbewegungen des Anhängers (2) vorgesehen ist, der eine Ist-Gierwinkelgeschwindigkeit ($\dot{\psi}_{ist}$) der Zugmaschine (1) und eine Soll-Gierwinkelgeschwindigkeit ($\dot{\psi}_{soll}$) der Zugmaschine (1) zuführbar sind, die Stabilisierungseinrichtung (11) die Ist-Gierwinkelgeschwindigkeit ($\dot{\psi}_{ist}$) mit der Soll-Gierwinkelgeschwindigkeit ($\dot{\psi}_{soll}$) vergleicht und bei Auftreten einer Differenz zwischen der Soll-Gierwinkelgeschwindigkeit und der Ist-Gierwinkelgeschwindigkeit eine Stellgröße ($\dot{h}\psi$) an ein Stellmittel (8) zum Abbau der Differenz liefert so dass die Amplitude des Knickwinkels $\alpha$ abgebaut wird, wobei die Stabilisierungseinrichtung (11) als Wert für die Soll-Gierwinkelgeschwindigkeit der Zugmaschine (1) die Soll-Gierwinkelgeschwindigkeit ($\dot{\psi}_{soll}$) zumindest aus der stationären Soll-Giergeschwindigkeit ($\dot{\psi}_{stat}$) der Zugmaschine (1) ermittelt und der aus der stationären Soll-Giergeschwindigkeit ($\dot{\psi}_{stat}$) der Zugmaschine (1) ermittelten Soll-Gierwinkelgeschwindigkeit ($\dot{\psi}_{soll}$) ein dynamisches Übertragungsverhalten aufmodulierbar ist wobei die stationäre Soll-Giergeschwindigkeit

$$(\dot{\psi}_{stat}) = \frac{1}{i_l \cdot l} \cdot \frac{v}{1 + \left(\dfrac{v}{v_{ch}}\right)^2} \cdot \delta_l$$

bei stationärer Kreisfahrt aus der Fahrzeuggeschwindigkeit ($v$), dem Fahrwunsch-Lenkwinkel ($\delta_l$), der charakteristischen Fahrgeschwindigkeit ($v_{ch}$) und der Lenkübersetzung ($i_l$) ermittelt wird.

**7.** Anhängergespann nach Anspruch 6, **dadurch gekennzeichnet, dass** das Stellmittel (8) eine Einrichtung zur Veränderung des Lenkwinkels ($\delta_l$) der Räder (9, 10) zumindest einer lenkbaren Fahrzeugachse (3) der Zugmaschine (1) ist.

**8.** Anhängergespann nach Anspruch 7, **dadurch gekennzeichnet, dass** das Stellmittel (8) ein mechanisches oder hydraulisches Überlagerungsgetriebe ist, mit dem ein zusätzlicher Lenkwinkel aufmodulierbar ist.

**9.** Anhängergespann nach Anspruch 6 oder 7, **dadurch gekennzeichnet, dass** das Stellmittel eine Lenkeinrichtung (8) ist, die es ermöglicht, einen Lenkwinkel ($\delta_l$) an den Rädern (9, 10) einer gelenkten Fahrzeugachse (3) der Zugmaschine (1) vorzugeben, der von dem Fahrerwunsch-Lenkwinkel ($\delta_1$) abweicht.

**10.** Anhängergespann nach Anspruch 9, **dadurch gekennzeichnet, dass** das Stellmittel (8) ein steer-by-wire-System ist.

**11.** Anhängergespann nach einem der Ansprüche 6 bis 10, **dadurch gekennzeichnet, dass** das Übertragungsverhalten der Soll-Gierwinkelgeschwindigkeit ($\dot{\psi}_{soll}$) einem PT1-Glied entspricht.

**12.** Anhängergespann nach einem der Ansprüche 6 bis 10, **dadurch gekennzeichnet, dass** das Übertragungsverhalten der Soll-Gierwinkelgeschwindigkeit ($\dot{\psi}_{soll}$) einem PDT2-Glied, insbesondere mit einem Dämpfungsfaktor von weniger als 1, entspricht.

**13.** Anhängergespann nach einem der Ansprüche 6 bis 12, **dadurch gekennzeichnet, dass** um den Wert der Soll-Gierwinkelgeschwindigkeit ($\dot{\psi}_{soll}$) ein Toleranzband gelegt ist

**14.** Anhängergespann nach einem der Ansprüche 7 bis 13, **dadurch gekennzeichnet, dass** die lenkbare Fahrzeugachse (3) die Vorderachse des Zugfahrzeuges (1) ist.

**Claims**

**1.** Method for stabilizing a tractor-trailer combination which is formed from a tractor and at least one trailer connected to the tractor via a coupling, the actual yaw angular velocity ($\dot{\psi}_{ist}$) of the tractor (1) being determined and compared with a desired yaw angular velocity ($\dot{\psi}_{soll}$) of the tractor (1) and should a difference occur between the desired yaw angular velocity and the actual yaw angular velocity, the steering angle ($\delta_1$) of the wheels (9, 10) of a steerable vehicle axle (3) of the tractor (1) is varied to eliminate the difference, so that the amplitude of the bend angle $\alpha$ is reduced, the desired yaw angular velocity ($\dot{\psi}_{soll}$) being determined at least from the fixed desired yaw rate ($\dot{\psi}_{stat}$) of the tractor (1) and a dynamic transfer behaviour is modulated to the fixed desired yaw rate ($\dot{\psi}_{stat}$) of the tractor (1), the fixed desired yaw rate

$$(\dot{\psi}_{stat}) = \frac{1}{i_l \cdot l} \cdot \frac{v}{1+\left(\dfrac{v}{v_{ch}}\right)^2} \cdot \delta_l \quad \text{being}$$

determined during stationary circular travel from the vehicle velocity (v), the steering angle ($\delta_l$) desired by the driver, the characteristic velocity ($v_{ch}$) and the steering ratio ($i_l$).

2. Method according to Claim 1, **characterized in that** the steering angle ($\delta_1$) of all wheels of the steerable vehicle axle (3) is varied to the same extent.

3. Method according to one of Claims 1 or 2, **characterized in that** the transfer behaviour of the desired yaw angular velocity ($\dot{\psi}_{soll}$) corresponds to a PT1 element.

4. Method according to one of Claims 1 or 2, **characterized in that** the transfer behaviour of the desired yaw angular velocity ($\dot{\psi}_{soll}$) corresponds to a PDT2 element, in particular with a damping factor of less than 1.

5. Method according to any one of Claims 1 to 4, **characterized in that** a tolerance band is applied around the value of the desired yaw angular velocity ($\dot{\psi}_{soll}$).

6. Tractor-trailer combination with a tractor and at least one trailer connected to the tractor via a coupling, a stabilizing device (11) being provided to suppress the occurrence of and/or to reduce undesired snaking motions of the trailer (2), and to which an actual yaw angular velocity ($\dot{\psi}_{ist}$) of the tractor (1) and a desired yaw angular velocity ($\dot{\psi}_{soll}$) of the tractor (1) may be supplied, the stabilizing device (11) compares the actual yaw angular velocity ($\dot{\psi}_{ist}$) with the desired yaw angular velocity ($\dot{\psi}_{soll}$) and should a difference occur between the desired yaw angular velocity and the actual yaw angular velocity, said stabilizing device supplies a correcting variable ($I_{\dot{\psi}}$) to an adjusting means (8) to eliminate the difference, so that the amplitude of the bend angle $\alpha$ is reduced, the stabilizing device (11) determining the desired yaw angular velocity ($\dot{\psi}_{soll}$), as a value for the desired yaw angular velocity of the tractor (1), at least from the fixed desired yaw rate ($\dot{\psi}_{stat}$) of the tractor (1) and a dynamic transfer behaviour being able to be modulated to the desired yaw angular velocity ($\dot{\psi}_{soll}$), determined from the fixed desired yaw rate ($\dot{\psi}_{stat}$) of the tractor (1), the fixed desired yaw rate

$$(\dot{\psi}_{stat}) = \frac{1}{i_1 \cdot l} \cdot \frac{v}{1+\left(\dfrac{v}{v_{ch}}\right)^2} \cdot \delta_l \quad \text{being de-}$$

termined during stationary circular travel from the vehicle velocity (v), the steering angle ($\delta_l$) desired by the driver, the characteristic velocity ($v_{ch}$) and the steering ratio ($i_l$).

7. Tractor-trailer combination according to Claim 6, **characterized in that** the adjusting means (8) is a device for varying the steering angle ($\delta_l$) of the wheels (9, 10) at least of a steerable vehicle axle (3) of the tractor (1).

8. Tractor-trailer combination according to Claim 7, **characterized in that** the adjusting means (8) is a mechanical or hydraulic differential drive by which an additional steering angle may be modulated.

9. Tractor-trailer combination according to Claim 6 or 7, **characterized in that** the adjusting means (8) is a steering device (8) which allows a steering angle ($\delta_l$) to be predetermined on the wheels (9, 10) of a steered vehicle axle (3) of the tractor (1) which deviates from the steering angle ($\delta_l$) desired by the driver.

10. Tractor-trailer combination according to Claim 9, **characterized in that** the adjusting means (8) is a steer-by-wire system.

11. Tractor-trailer combination according to any one of Claims 6 to 10, **characterized in that** the transfer behaviour of the desired yaw angular velocity ($\dot{\psi}_{soll}$) corresponds to a PT1 element.

12. Tractor-trailer combination according to any one of Claims 6 to 10, **characterized in that** the transfer behaviour of the desired yaw angular velocity ($\dot{\psi}_{soll}$) corresponds to a PDT2 element, in particular with a damping factor of less than 1.

13. Tractor-trailer combination according to any one of Claims 6 to 12, **characterized in that** a tolerance band is applied around the value of the desired yaw angular velocity ($\dot{\psi}_{soll}$).

14. Tractor-trailer combination according to any one of Claims 7 to 13, **characterized in that** the steerable vehicle axle (3) is the front axle of the tractor vehicle (1).

## Revendications

1.  Procédé pour stabiliser un attelage de remorque qui est constitué d'un véhicule tracteur et d'au moins une remorque reliée au véhicule tracteur par le biais d'un accouplement, la vitesse angulaire de lacet réelle ($\dot{\psi}_{ist}$) du véhicule tracteur (1) étant déterminée et comparée avec une vitesse angulaire de lacet de consigne ($\dot{\psi}_{soll}$) du véhicule tracteur (1) et, en présence d'une différence entre la vitesse angulaire de lacet de consigne et la vitesse angulaire de lacet réelle, l'angle de direction ($\delta_l$) des roues (9, 10) d'un essieu orientable (3) du véhicule tracteur (1) étant modifié pour supprimer la différence de sorte que l'amplitude de l'angle de déviation $\alpha$ soit supprimée, la vitesse angulaire de lacet de consigne ($\dot{\psi}_{soll}$) étant déterminée au moins à partir de la vitesse de lacet de consigne stationnaire ($\dot{\psi}_{stat}$) du véhicule tracteur (1) et un comportement de transmission dynamique étant superposé par modulation à la vitesse de lacet de consigne stationnaire ($\dot{\psi}_{stat}$) du véhicule tracteur (1), la vitesse de lacet de consigne stationnaire

$$\dot{\psi}_{stat} = \frac{1}{i_l \cdot l} \cdot \frac{v}{1 + \left(\dfrac{v}{v_{ch}}\right)^2} \cdot \delta_l \qquad \text{lors d'un par-}$$

    cours circulaire stationnaire étant déterminée à partir de la vitesse du véhicule (v), de l'angle de direction souhaité ($\delta_l$), de la vitesse de déplacement caractéristique ($v_{ch}$) et de la démultiplication de la direction ($i_l$).

2.  Procédé selon la revendication 1, **caractérisé en ce que** l'angle de direction ($\delta_l$) de toutes les roues de l'essieu orientable (3) est modifié de la même valeur.

3.  Procédé selon l'une des revendications 1 ou 2, **caractérisé en ce que** le comportement de consigne de la vitesse angulaire de lacet de consigne ($\dot{\psi}_{soll}$) correspond à un élément PT1.

4.  Procédé selon l'une des revendications 1 ou 2, **caractérisé en ce que** le comportement de consigne de la vitesse angulaire de lacet de consigne ($\dot{\psi}_{soll}$) correspond à un élément PDT2, notamment avec un facteur d'atténuation inférieur à 1.

5.  Procédé selon l'une des revendications 1 à 4, **caractérisé en ce qu'**une bande de tolérance est appliquée à la valeur de la vitesse angulaire de lacet de consigne ($\dot{\psi}_{soll}$).

6.  Attelage de remorque comprenant un véhicule tracteur et au moins une remorque reliée au véhicule tracteur par le biais d'un accouplement, un dispositif de stabilisation (11) étant prévu pour empêcher l'apparition des et/ou pour supprimer les mouvements de roulis de la remorque (2), auquel peuvent être acheminées une vitesse angulaire de lacet réelle ($\dot{\psi}_{ist}$) du véhicule tracteur (1) et une vitesse angulaire de lacet de consigne ($\dot{\psi}_{soll}$) du véhicule tracteur (1), le dispositif de stabilisation (11) comparant la vitesse angulaire de lacet réelle ($\dot{\psi}_{ist}$) avec la vitesse angulaire de lacet de consigne ($\dot{\psi}_{soll}$) et, en présence d'une différence entre la vitesse angulaire de lacet de consigne et la vitesse angulaire de lacet réelle, délivrant une grandeur de commande ($I_{\dot{\psi}}$) à un élément de commande (8) pour supprimer la différence de sorte que l'amplitude de l'angle de déviation $\alpha$ soit supprimée, le dispositif de stabilisation (11) déterminant comme valeur de la vitesse angulaire de lacet de consigne ($\dot{\psi}_{soll}$) du véhicule de traction (1) la vitesse angulaire de lacet de consigne ($\dot{\psi}_{soll}$) au moins à partir de la vitesse de lacet de consigne stationnaire ($\dot{\psi}_{stat}$) du véhicule tracteur (1) et un comportement de transmission dynamique pouvant être superposé par modulation à la vitesse de lacet de consigne ($\dot{\psi}_{soll}$) déterminée à partir de la à partir de la vitesse de lacet de consigne stationnaire ($\dot{\psi}_{stat}$) du véhicule tracteur (1), la vitesse de lacet de consigne stationnaire

$$\dot{\psi}_{stat} = \frac{1}{i_l \cdot l} \cdot \frac{v}{1 + \left(\dfrac{v}{v_{ch}}\right)^2} \cdot \delta_l \qquad \text{lors d'un par-}$$

    cours circulaire stationnaire étant déterminée à partir de la vitesse du véhicule (v), de l'angle de direction souhaité ($\delta_l$), de la vitesse de déplacement caractéristique ($v_{ch}$) et de la démultiplication de la direction ($i_l$).

7.  Attelage de remorque selon la revendication 6, **caractérisé en ce que** le moyen de commande (8) est un dispositif pour modifier l'angle de direction ($\delta_l$) des roues (9, 10) au moins d'un essieu orientable (3) du véhicule de traction (1).

8.  Attelage de remorque selon la revendication 7, **caractérisé en ce que** le moyen de commande (8) est un engrenage de superposition à l'aide duquel un angle de direction supplémentaire peut être superposé par modulation.

9.  Attelage de remorque selon la revendication 6 ou 7, **caractérisé en ce que** le moyen de commande est un dispositif de commande de direction (8) qui permet de prédéfinir au niveau des roues (9, 10) d'un essieu orientable (3) du véhicule de traction (1) un

angle de direction ($\delta_l$) qui est différent de l'angle de direction ($\delta_l$) souhaité par le conducteur.

10. Attelage de remorque selon la revendication 9, **caractérisé en ce que** le moyen de commande (8) est un système de commande de direction par câble.

11. Attelage de remorque selon l'une des revendications 6 à 10, **caractérisé en ce que** le comportement de consigne de la vitesse angulaire de lacet de consigne ($\dot{\psi}_{soll}$) correspond à un élément PT1.

12. Attelage de remorque selon l'une des revendications 6 à 10, **caractérisé en ce que** le comportement de consigne de la vitesse angulaire de lacet de consigne ($\dot{\psi}_{soll}$) correspond à un élément PDT2, notamment avec un facteur d'atténuation inférieur à 1.

13. Attelage de remorque selon l'une des revendications 6 à 12, **caractérisé en ce qu'**une bande de tolérance est appliquée à la valeur de la vitesse angulaire de lacet de consigne ($\dot{\psi}_{soll}$).

14. Attelage de remorque selon l'une des revendications 7 à 13, **caractérisé en ce que** l'essieu orientable (3) du véhicule est l'essieu avant du véhicule tracteur (1).

# FIG. 1

EP 0 989 049 B1

FIG. 2

# FIG. 3

$\delta_1$

V

Vch

14

15

$\dot{\psi}_{stat}$

$\dot{\psi}_{soll}$

FIG. 4

FIG. 5a

FIG. 5b